(19) Europäisches Patentamt / European Patent Office / Office européen des brevets

(11) **EP 4 648 126 A1**

(12) **EUROPEAN PATENT APPLICATION**
published in accordance with Art. 153(4) EPC

(43) Date of publication:
**12.11.2025 Bulletin 2025/46**

(21) Application number: **24873024.4**

(22) Date of filing: **27.09.2024**

(51) International Patent Classification (IPC):
$H01M\ 4/139^{(2010.01)}$    $H01M\ 4/04^{(2006.01)}$
$H01M\ 4/38^{(2006.01)}$    $H01M\ 4/48^{(2010.01)}$
$H01M\ 4/505^{(2010.01)}$    $H01M\ 4/525^{(2010.01)}$
$H01M\ 10/052^{(2010.01)}$

(52) Cooperative Patent Classification (CPC):
H01M 4/04; H01M 4/139; H01M 4/38; H01M 4/48;
H01M 4/505; H01M 4/525; H01M 10/052;
Y02E 60/10

(86) International application number:
**PCT/KR2024/014689**

(87) International publication number:
**WO 2025/071316 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 27.09.2023 KR 20230130479
26.09.2024 KR 20240130749

(71) Applicant: **LG Energy Solution, Ltd.**
**Seoul 07335 (KR)**

(72) Inventors:
• **LEE, Ilha**
**Daejeon 34122 (KR)**

• **KOO, Daeryung**
**Daejeon 34122 (KR)**
• **JOO, Mun Kyu**
**Daejeon 34122 (KR)**
• **HONG, Doyoung**
**Daejeon 34122 (KR)**
• **KWON, Yohan**
**Daejeon 34122 (KR)**
• **CHAE, Jonghyun**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING ELECTRODE FOR LITHIUM SECONDARY BATTERY**

(57) The present invention relates to a method of manufacturing an electrode for a lithium secondary battery, the method including: preparing a transfer laminate including a lithium metal layer and a base material layer; bringing the transfer laminate into contact such that the lithium metal layer comes into contact with at least one surface of an electrode active material layer; and separating the base material layer from the transfer laminate, wherein the separating is performed a predetermined time after the bringing the transfer laminate into contact.

[Figure 1]

**EP 4 648 126 A1**

## Description

[Technical Field]

This application claims priority to and the benefit of Korean Patent Application No. 10-2023-0130479 filed in the Korean Intellectual Property Office on September 27, 2023 and Korean Patent Application No. 10-2024-0130749 filed in the Korean Intellectual Property Office on September 26, 2024, the entire contents of which are incorporated herein by reference.

The present invention relates to a method of manufacturing an electrode for a lithium secondary battery.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is actively being conducted on a method of manufacturing a high-density electrode with a higher energy density per unit volume as an electrode for such high-capacity lithium secondary batteries, and the trend is shifting toward higher loading to improve energy density.

In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector.

Note that lithium secondary batteries undergo lithium loss from the first charge after a battery is manufactured. During subsequent charge/discharge cycles and high-temperature storage periods, lithium loss continues to occur, albeit in very small amounts, leading to battery degradation. To compensate for the lithium loss, a pre-lithiation process is applied to additionally intercalate lithium into the battery before operating the battery. However, the pre-lithiation process, which is an exothermic reaction, causes the temperature of the electrode surface to increase, which may affect the performance or manufacturing process of the battery.

[Citation List]

[Patent Literature]

(Patent Literature 1) Korean Patent Application Publication No. 10-2021-0029459

[Detailed Description of the Invention]

[Technical Problem]

The present invention relates to a method of manufacturing an electrode for a lithium secondary battery, which is capable of reducing heat that is generated during pre-lithiation.

[Technical Solution]

An exemplary embodiment of the present invention provides a method of manufacturing an electrode for a lithium secondary battery, the method including: preparing a transfer laminate including a lithium metal layer and a base material layer; bringing the transfer laminate into contact such that the lithium metal layer comes into contact with at least one surface of an electrode active material layer; and separating the base material layer from the transfer laminate, wherein the separating is performed 10 to 120 seconds after the bringing the transfer laminate into contact.

An exemplary embodiment of the present invention provides a method of manufacturing an electrode for a lithium secondary battery, the method including: preparing a transfer laminate including a lithium metal layer and a base material layer; bringing the transfer laminate into contact such that the lithium metal layer comes into contact with at least one surface of an electrode active material layer; and separating the base material layer from the transfer laminate, wherein the separating is performed a time (T') satisfying Formula 1 after the bringing the transfer laminate into contact.

[Formula 1]

$$T' \; (sec) \; \geq \; T \; (sec) \; \times \; 0.3$$

in Formula 1,

T refers to a time taken for a surface of an electrode contacted by the lithium metal layer to reach a peak temperature when the base material layer is separated immediately after bringing the transfer laminate into contact.

An exemplary embodiment of the present specification provides a lithium secondary battery including an electrode for a lithium secondary battery manufactured by the above-described method; a separator; and an electrolyte.

Another exemplary embodiment of the present specification provides a battery module including the lithium secondary battery described above.

Still another exemplary embodiment of the present specification provides a battery pack including the lithium secondary battery described above.

Further, an exemplary embodiment of the present specification provides a battery pack including the battery module described above.

[Advantageous Effects]

The method of manufacturing an electrode for a lithium secondary battery according to an exemplary embodiment of the present invention is to pre-lithiate an electrode through a transfer process, whereby a negative electrode is pre-lithiated or a positive electrode is over-lithiated to serve as an additional source of Li, leading to a significantly increased cycle life, minimization of Li remaining on the surface of the electrode, and enabling mass production due to a fast process speed.

In addition, the manufacturing method according to an exemplary embodiment of the present invention can reduce heat generated during pre-lithiation by removing the base material layer after a certain period of time has passed from the transfer of the lithium metal layer to the electrode active material layer. This can minimize byproducts, which are generated on the electrode surface due to exposure to the atmosphere at low temperatures, and increase process safety.

[Brief Description of Drawings]

FIG. 1 is a diagram schematically illustrating a process according to an exemplary embodiment of the present specification.

FIG. 2 is a diagram showing a method of manufacturing an electrode for a lithium secondary battery according to an exemplary embodiment of the present specification.

FIG. 3 is a graph showing a temperature change of a negative electrode surface according to a separation time of a base material layer in Experimental Example 1.

FIG. 4 is a graph showing a temperature change of a negative electrode surface according to a separation time of a base material layer in Experimental Example 2.

FIG. 5 is a graph showing a temperature change of a negative electrode surface according to a separation time of a base material layer in Experimental Example 3.

FIG. 6 is a diagram showing a laminated structure of a lithium secondary battery according to an exemplary embodiment of the present specification.

FIG. 7 is a photograph of surfaces of negative electrodes of Comparative Example 1-1 and Examples 1-3 and 1-6.

FIG. 8 is a photograph of a surface of a negative electrode from which the base material layer was separated after 1 minute or longer from contact of a transfer laminate in Preparation Example 1.

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

In the present specification, 'p to q' means a range of 'p or more and q or less'.

In the present specification, the "specific surface area" is measured by a BET method, and specifically, is calculated from the adsorption amount of nitrogen gas at the temperature of liquid nitrogen (77K) using BELSORP-mini II commercially available from BEL Japan Inc. That is, in the present specification, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Note that the average particle diameter may be measured using a laser diffraction method. In the laser diffraction method, in general, particle diameters ranging from a submicron region to several millimeters can be measured, and results with high reproducibility and high resolution can be obtained.

The measurement of the average particle diameter may be confirmed using water and Triton-X100 dispersant with a Microtrac apparatus (manufacturer: Microtrac model name: S3500). Specifically, the average particle diameter of a positive electrode active material may be measured under a condition of a refractive index of 1.5 to 1.7, and the average particle diameter of a negative electrode active material may be measured under a condition of a refractive index of 1.97 or 2.42. For example, after dispersing particles in a dispersion medium, the resulting dispersion is introduced into a commercially available laser diffraction particle size measuring device and irradiated with an ultrasonic wave of about 28 kHz with an output of 60 W. Thereafter, a cumulative volume particle size distribution graph is obtained, and then the average particle diameter may be determined by obtaining the particle size corresponding to 50% of the cumulative volume.

In an exemplary embodiment of the present specification, the particle size or particle diameter may refer to the average diameter or representative diameter of each grain forming metal powder.

As used herein, the singular forms "a", "an" and "the" are intended to include the plural forms as well, unless the context clearly indicates otherwise.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

Hereinafter, preferred exemplary embodiments of the present invention will be described in detail. However, it should be understood that the exemplary embodiments of the present invention may be modified in various forms and the scope of the present invention is not limited to the exemplary embodiments described below.

A method of manufacturing an electrode for a lithium secondary battery according to exemplary embodiment of the present specification includes the steps of: preparing a transfer laminate including a lithium metal layer and a base material layer; bringing the transfer laminate into contact such that the lithium metal layer comes into contact with at least one surface of an electrode active material layer; and separating the base material layer from the transfer laminate, wherein the separating step is performed 10 to 120 seconds after the step of bringing the transfer laminate into contact.

The method of manufacturing an electrode for a lithium secondary battery according to the present specification is to perform pre-lithiation on at least one surface of an electrode active material layer so as to improve Coulomb efficiency by solving an irreversible problem of the electrode. Although there are electrochemical methods, SLMP methods, and the like as the pre-lithiation process method, the present invention is intended to provide a method of manufacturing an electrode through pre-lithiation by a transfer method, which has advantages of minimizing Li remaining on the electrode surface and enabling a fast process speed.

That is, during processes of contacting and pressurizing the transfer laminate on one surface of the electrode active material layer, the electrode active material layer and the lithium metal layer react, resulting in pre-lithiation. Since the pre-lithiation reaction is an exothermic reaction, the temperature of the electrode surface portion brought into contact with the lithium metal layer gradually rises and then drops after reaching the peak temperature. Regarding this, the temperature of the electrode surface that is exposed to the atmosphere varies depending on the time point at which the base material layer is separated. If the base material layer is separated too early, the electrode surface, which is in a high-temperature state due to the heat generated by pre-lithiation, is exposed to the atmospheric environment, which may lead to an increased risk of fire due to contact with oxygen, or a rapid and localized increase in the amount of byproducts, such as lithium oxide and especially lithium nitride, due to promoted byproduct reactions. If the base material layer is separated too late, the heat generated by pre-lithiation becomes trapped in the base material layer, leading to a further increase in the surface temperature. This may cause byproducts, such as lithium nitride, to be generated more rapidly on the electrode surface. Further, as lithium byproducts are formed, the amount of lithium intended to be intercalated into the electrode active material becomes less than intended, resulting in a reduced battery capacity.

Accordingly, the present invention has features of reducing byproducts generated on the electrode surface through appropriate adjustment of the base material layer separation time, and enhancing process stability through exposure to an atmospheric environment at low temperatures.

That is, a method of manufacturing an electrode for a lithium secondary battery according to exemplary embodiment of the present specification includes the steps of: preparing a transfer laminate including a lithium metal layer and a base material layer; bringing the transfer laminate into contact such that the lithium metal layer comes into contact with at least one surface of an electrode active material layer; and separating the base material layer from the transfer laminate, wherein the separating step is performed 10 to 120 seconds after the step of bringing the transfer laminate into contact.

In the method of manufacturing an electrode for a lithium secondary battery according to an exemplary embodiment of the present specification, the separating step may be performed 10 to 120 seconds after, specifically 10 to 100 seconds after, and more specifically 40 to 100 seconds after the step of bringing the transfer laminate into contact.

The manufacturing method according to an exemplary embodiment of the present specification may be based on a roll-to-roll process. According to the roll-to-roll process, during a process in which an electrode active material layer and a transfer laminate travel by drive rolls, the transfer laminate may come into contact with one surface of the electrode active material layer while both pass a transfer roll simultaneously, and during a process in which the electrode active material layer, with which the transfer laminate has come into contact, travels, the base material layer of the transfer laminate may be separated from the lithium metal layer of the transfer laminate while passing through a separation roll.

In the present specification, the drive rolls refer to rolls, which are positioned at both ends of the electrode active material layer or transfer laminate and can cause the electrode active material layer and the transfer laminate to travel by rotating in a certain direction.

In the present specification, the transfer roll refers to a roll that brings the electrode active material layer and the transfer laminate into contact with each other, ensuring that the electrode active material layer and the transfer laminate meet at any one point while the transfer laminate passes between the electrode active material layer and the transfer roll. Specifically, at any point where the transfer roll and the transfer laminate begin to meet, the electrode active material layer and the transfer laminate (specifically, the lithium metal layer) can simultaneously meet at any point, resulting in contact between the electrode active material layer and the transfer laminate.

In the present specification, the separation roll refers to a roll that separates the base material layer from the transfer laminate while rotating in the same direction as the transfer roll. Specifically, at any point where the separation roll and the transfer laminate begin to meet, any points of the separation roll and the base material layer can meet simultaneously, resulting in separation of the base material layer.

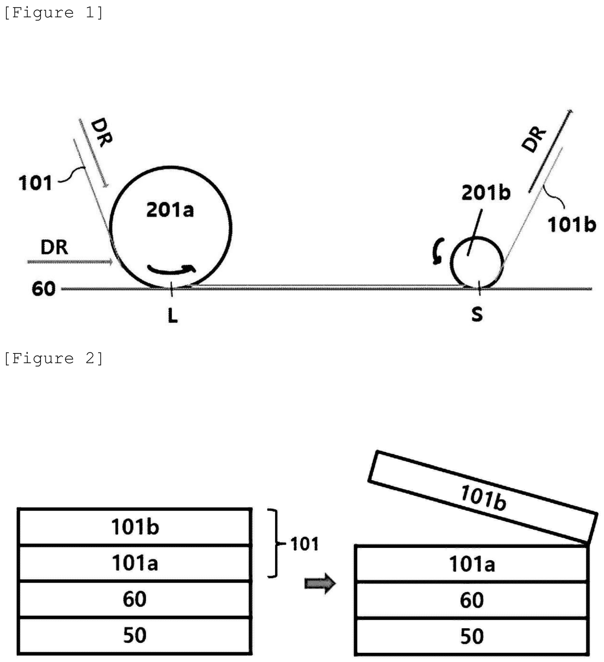

FIG. 1 is a simplified diagram schematically illustrating the contact of the transfer laminate and the separation of the base material layer according to an exemplary embodiment of the present specification by the roll-to-roll process.

Referring to FIG. 1, a transfer laminate 101, in which a lithium metal layer (not shown) is positioned to come into contact with an electrode active material layer 60, may travel from any point toward the electrode active material layer 60 and pass between a transfer roll 201a and the electrode active material layer, resulting in contact between the lithium metal layer (not shown) and the electrode active material layer 60 at one point. In this case, a point on the electrode active material layer 60 where the lithium metal layer (not shown) first begins to meet the electrode active material layer 60 is referred to as a point L. Specifically, a point on the electrode active material layer 60 where the transfer roll 201a and the transfer laminate 101, and the transfer laminate 101 and the electrode active material layer 60 begin to meet simultaneously for the first time is referred to as the point L.

In addition, while the electrode active material layer 60, with which the transfer laminate 101 has come into contact, travels and passes a separation roll 201b, a base material layer 101b may be separated from the transfer laminate 101. In this case, a point on the electrode active material layer 60 where the base material layer 101b first begins to separate from the transfer laminate 101 is referred to as a point S.

In the present specification, the configuration of separating the base material layer from the transfer laminate 10 to 120 seconds after the step of bringing the transfer laminate into contact with at least one surface of the electrode active material layer means that a time taken for the transfer laminate 101 and the electrode active material layer 60 to travel from the point L to the point S of FIG. 1 is 10 to 120 seconds.

In the present specification described below, the separation of the base material layer immediately after bringing the transfer laminate into contact with the electrode active material layer, or the separation of the base material layer within 1 second after the step of bringing the transfer laminate into contact means that the point L and the point S are the same, or the time taken from the point L to the S point is within several seconds, specifically, within 1 second.

Although not shown in FIG. 1, the electrode active material layer 60 may have an electrode current collector layer (not shown) provided on one surface, specifically on a surface of the electrode active material layer opposite to a surface with which the transfer laminate comes into contact. In addition, the pre-lithiation of the electrode active material layer 60 may proceed from the point L of FIG. 1.

In addition, although FIG. 1 shows that the transfer roll 201a and the separation roll 201b are provided on one side of the electrode active material layer 60, the transfer roll 201a and the separation roll 201b may be provided on both sides of the electrode active material layer 60, and in this case, the contact of the transfer laminate and the separation of the base material layer may be performed on both sides of the electrode active material layer 60.

FIG. 2 is a diagram showing a method of manufacturing an electrode for a lithium secondary battery according to an exemplary embodiment of the present specification. Specifically, FIG. 2 shows a pre-lithiation process of positioning a transfer laminate 101 so that a lithium metal layer 101a comes into contact with an electrode active material layer 60 formed on one surface of an electrode current collector layer 50, performing transfer, and then separating a base material layer 101b.

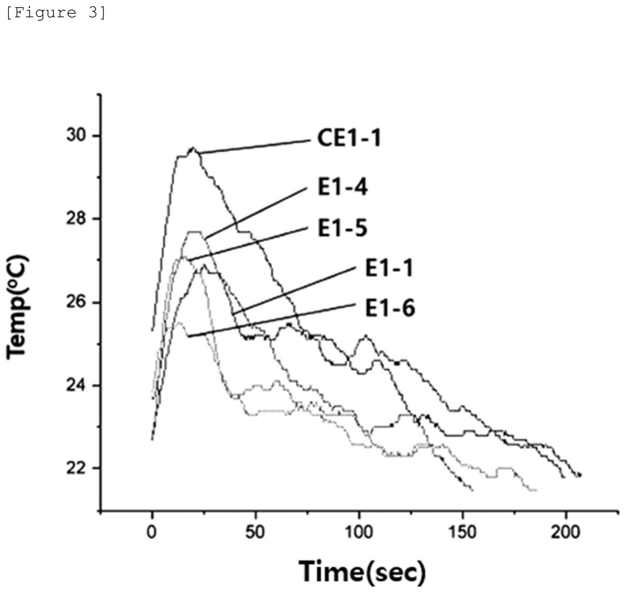

FIG. 3 is a graph showing a temperature change of a negative electrode surface according to a separation time of a base material layer after bringing a transfer laminate into contact with a negative electrode active material layer in which a negative electrode active material layer using silicon oxide as a negative electrode active material and a negative electrode active material layer using Si as a negative electrode active material are double-layer coated. In this case, the surface temperature of the negative electrode was measured after fixing a K-type thermocouple to the negative electrode surface where the lithium metal layer had made contact after the separation of the base material layer.

In FIG. 3, it was confirmed that the peak (maximum) temperature on the surface of the negative electrode was lower in Examples 1-1 to 1-6, where the base material layer was removed 10 to 60 seconds after contact with the transfer laminate, as compared with Comparative Example 1-1, where the base material layer was removed immediately after contact with the transfer laminate. The negative electrode was exposed to the atmosphere at low temperatures, resulting in no generation of byproducts on the surface of the negative electrode, and enabling the manufacturing process to be carried out more safely.

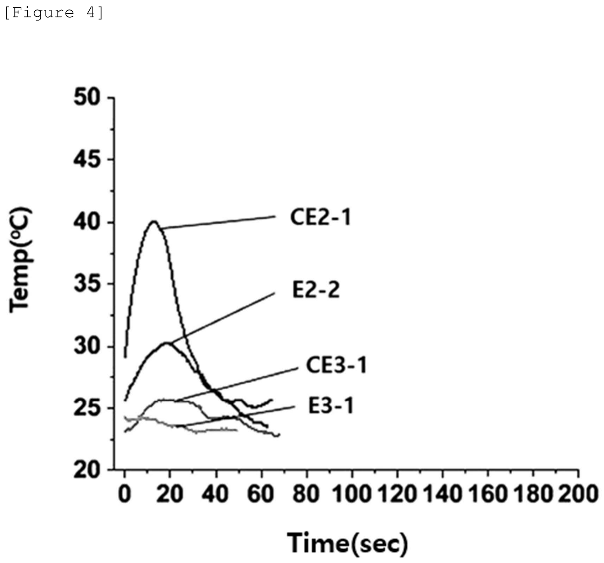

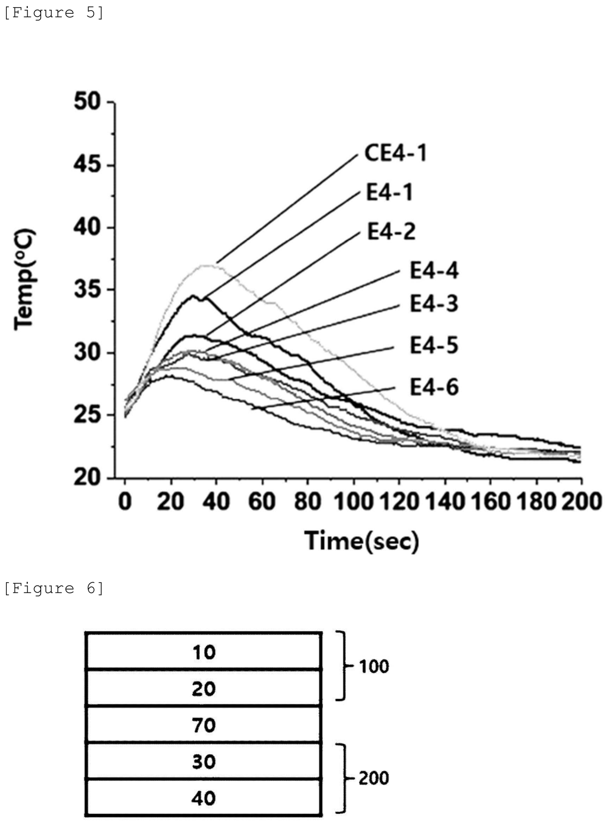

FIG. 4 is a graph showing a temperature change of a negative electrode surface according to a separation time of a base material layer after transferring a lithium metal layer onto a negative electrode active material layer using a pure Si negative electrode active material. As in FIG. 3, it was confirmed that the maximum temperature on the surface of the negative electrode was lower in Example 2-2, where the base material layer was removed after a time in accordance with the above range, as compared with Comparative Example 2-1, where the base material layer was removed immediately after contact with the transfer laminate. This could also be confirmed in the graph of FIG. 5, which shows a surface temperature of a positive electrode in which a lithium metal layer was transferred onto a positive electrode active material layer.

The transfer process and the separation time of the base material layer according to an exemplary embodiment of the present specification can be applied not only to the pre-lithiation of the negative electrode but also to the pre-lithiation of the positive electrode, and in this case, the electrode surface temperature rises although there may be differences in degree depending on the electrode type. That is, the reaction between the electrode active material and the lithium metal layer is an exothermic reaction, and the surface temperature of the electrode gradually rises due to the heat generated by the pre-lithiation reaction and then decreases. Regarding this, if the base material layer is separated immediately after contact with the transfer laminate, the electrode surface reaches its peak temperature while exposed to the atmosphere, and comes into contact with external oxygen, which can easily lead to ignition. In addition, if the base material layer is separated after a long period of time, the heat may accumulate in the base material layer, which may generate a significant amount of lithium oxide and nitride, which are byproducts of lithium, thereby affecting battery performance. In addition, since the reaction that generates the byproducts is also an exothermic reaction, the risk of fire increases.

Accordingly, the present invention is intended to separate the base material layer when the temperature of the electrode surface, which has reached the peak temperature due to the pre-lithiation reaction, begins to decrease. The separation time range of the base material layer according to an exemplary embodiment of the present specification is optimized for this purpose. This reduces the peak temperature of the electrode surface, and since the electrode is exposed to the atmosphere in a state in which the temperature of the electrode surface has dropped, the risk of ignition and the formation of byproducts can be reduced.

In another exemplary embodiment of the present specification, the step of separating the base material layer may be performed a time (T') satisfying Formula 1 below after the step of bringing the transfer laminate into contact.

$$[\text{Formula 1}]$$

$$T' \ (\text{sec}) \geq T \ (\text{sec}) \times 0.3$$

In Formula 1, T refers to a time taken for a surface of an electrode contacted by the lithium metal layer to reach a peak temperature when the base material layer is separated immediately after bringing the transfer laminate into contact.

That is, in another exemplary embodiment of the present specification, the step of separating the base material layer may be performed after a time T' has elapsed based on the time at which the transfer laminate is brought into contact with the electrode active material layer. In this case, the time T' may be greater than or equal to 0.3 times, specifically greater than or equal to 0.6 times, and less than or equal to 6 times, specifically less than or equal to 4 times, and more specifically less than or equal to 3.2 times, the time (T) taken to reach the electrode peak surface temperature due to pre-lithiation when the base material layer is separated immediately after the transfer laminate is brought into contact with one surface of the electrode active material layer, specifically within 1 second after the time of contact, more specifically simultaneously with the time of contact with the transfer laminate, i.e., after 0 second.

When the separation time of the base material layer according to an exemplary embodiment of the present specification falls within the above range, the peak temperature of the electrode surface due to pre-lithiation can be reduced, and the risk of ignition and the formation of byproducts can be reduced.

The method of manufacturing an electrode for a lithium secondary battery according to an exemplary embodiment of the present specification includes a step of preparing a transfer laminate including a lithium metal layer and a base material layer.

In an exemplary embodiment of the present specification, the transfer laminate has a structure in which the lithium metal layer for transfer and the base material layer are laminated, and the lithium metal layer may be formed on the base material layer by deposition or coating.

In an exemplary embodiment of the present specification, a thickness of the transfer laminate may be 65 $\mu$m or less, specifically 35 $\mu$m or less, and 10 $\mu$m or greater, specifically 11 $\mu$m or greater.
In an exemplary embodiment of the present specification, the thickness of the transfer laminate may be 10 $\mu$m or greater and 65 $\mu$m or less, specifically 11 $\mu$m or greater and 65 $\mu$m or less, and more specifically 11 $\mu$m or greater and 35 $\mu$m or less.

When the thickness of the transfer laminate according to an exemplary embodiment of the present specification falls within the above range, the amount of heat generated during pre-lithiation is small and the heat is dissipated well, so lithium loss and safety problems may not occur.

In an exemplary embodiment of the present specification, a thickness of the lithium metal layer may be 1 $\mu$m or greater and 10 $\mu$m or less, specifically 1 $\mu$m or greater and 9 $\mu$m or less, and more specifically 3 $\mu$m or greater and 6.5 $\mu$m or less.

When the thickness of the lithium metal layer according to an exemplary embodiment of the present specification is 1 $\mu$m or greater, pre-lithiation can proceed to an extent that solves the irreversible problem of the electrode, thereby improving the coulombic efficiency. Additionally, when the thickness is 10 $\mu$m or less, the amount of heat generated during pre-lithiation is small, and the heat is dissipated well, so lithium loss and safety problems due to the generation of lithium byproducts may not occur.

In an exemplary embodiment of the present specification, the base material layer can be used without limitation as long as it has the characteristics of being able to withstand process conditions such as high temperatures during the step of depositing the lithium metal layer and preventing the problem of reverse peeling, where the lithium metal layer is transferred onto the base material layer during a winding process for transferring the deposited lithium metal layer.

Specifically, in an exemplary embodiment of the present specification, the base material layer may be one or more selected from the group consisting of polyethylene terephthalate (PET), polyimide (PI), poly(methylmethacrylate) (PMMA), polypropylene, polyethylene, and polycarbonate.

In an exemplary embodiment of the present specification, a thickness of the base material layer may fall within a range of 1 $\mu$m or greater and 300 $\mu$m or less, specifically 5 $\mu$m or greater and 200 $\mu$m or less, and more specifically 10 $\mu$m or greater and 100 $\mu$m or less.
When the thicknesses of the base layer and the lithium metal layer fall within the above ranges, the transfer of the lithium metal to the negative electrode active material layer can occur efficiently and the reverse transfer can be prevented.

In an exemplary embodiment of the present specification, a deposition method for depositing the lithium metal layer on the base material layer may be selected from a physical vapor deposition (PVD) method and a chemical vapor deposition (CVD) method, and among the physical vapor deposition methods, a thermal evaporation method may be mainly used. However, no such limitation is intended, and various deposition methods used in the art may be used.

In addition, a structure may be possible, which further includes a separate layer for reducing heat generated by pre-lithiation between the lithium metal layer and the base material layer, and a structure may be possible where the base material layer cover part or all of the lithium metal layer or the separate layer positioned on the lithium metal layer; however, there is no limitation on the structure.

In the step of preparing the transfer laminate according to an exemplary embodiment of the present specification, the transfer laminate may further include a release layer. Specifically, the release layer may be included between the lithium metal layer and the base material layer, and by coating the release layer between the lithium metal layer and the base material layer, peeling or transfer of the base material layer may be facilitated.

In an exemplary embodiment of the present specification, in the step of preparing the transfer laminate, the transfer laminate may further include a release layer, and the step of separating the base material layer from the transfer laminate may include a step of separating the release layer.

In an exemplary embodiment of the present specification, the release layer may be one or more selected from the group consisting of polycarbonate (PC), polydimethylsiloxane (PDMS), polymethylhydrosiloxane (PMHS), polyimide (PI), and polymethylmethacrylate (PMMA), but is not limited thereto, and silicone-based or fluorine-based materials may also be used.

In an exemplary embodiment of the present specification, a thickness of the release layer may be 0.2 μm or greater and 3 μm or less, specifically, 0.5 μm or greater and 1 μm or less.

In an exemplary embodiment of the present specification, when the release layer falls within the thickness range, sufficient release force can be ensured, and the release layer positioned on a surface after transfer of the lithium metal layer can prevent heat dissipation and accelerated formation of byproducts.

In an exemplary embodiment of the present specification, the release layer may be formed by a coating method. For example, the coating method may be a method selected from the group consisting of dip coating, spray coating, spin coating, die coating, gravure coating, micro-gravure coating, comma coating, and roll coating, but is not limited thereto, and various coating methods that can be used in the art to form a coating layer can be used.

The method of manufacturing an electrode for a lithium secondary battery according to an exemplary embodiment of the present specification includes a step of bringing the transfer laminate into contact such that the lithium metal layer comes into contact with at least one surface of an electrode active material layer. This is a step for performing pre-lithiation by transferring lithium metal to the electrode active material layer. Specifically, pre-lithiation of the electrode active material layer may proceed from the step of bringing the transfer laminate into contact such that at least one surface of an electrode active material layer comes into contact with the lithium metal layer.

In an exemplary embodiment of the present specification, the step of bringing the transfer laminate into contact may further include a pressurizing step.

The pressurizing step is a step for transferring the lithium metal layer to at least one surface of the electrode active material layer. The pressurizing step can promote contact between lithium and the electrode active material, enabling the pre-lithiation to proceed more smoothly.

In an exemplary embodiment of the present specification, the pressurizing step may involve applying a pressure of 100 kgf/cm$^2$ or higher and 1000 kgf/cm$^2$ or less, specifically 500 kgf/cm$^2$ or higher and 1000 kgf/cm$^2$ or less.

In an exemplary embodiment of the present specification, when the above pressure conditions are satisfied, an effect of facilitating the transfer of lithium from the lithium metal layer to the electrode active material layer is achieved. However, if the pressure exceeds the pressure range, the reactivity between lithium and the electrode increases, resulting in the generation of more heat. Consequently, lithium may not be transferred and may be deintercalated at the electrode portion.

The method of manufacturing an electrode for a lithium secondary battery according to an exemplary embodiment of the present specification may further include a step of cooling the contacted electrode active material layer and transfer laminate after the pressurizing step.

The cooling step according to the present specification is intended to secure a separation time of the base material layer. As described above, multiple rolls can be configured to reduce an equipment space, and an additional cooling unit may be provided to prevent the surface temperature of the electrode from rising due to heat generated by pre-lithiation.

In an exemplary embodiment of the present specification, examples of the cooling unit include a method using a vortex tube or a free roll, but there is no limitation on the method as long as it prevents the surface temperature of the electrode from rising due to pre-lithiation.

That is, in FIG. 1, which schematically illustrates a manufacturing method according to an exemplary embodiment of the present specification, an additional roll may be configured between the transfer roll 201a and the separation roll 201b to secure the separation time of the base material layer 101b regardless of the traveling speed, to reduce the equipment space, and to allow for the configuration of an additional cooling unit to further reduce the temperature of the electrode surface due to pre-lithiation.

In the method of manufacturing an electrode for a lithium secondary battery according to the present specification, a traveling speed of the electrode active material layer from the step of bringing the transfer laminate into contact with at least one surface of the electrode active material layer to the step of separating the base material layer from the transfer laminate may be 80 m/min or less, specifically 70 m/min or less, and 0.5 m/min or greater, specifically 1 m/min or greater.

The method of manufacturing an electrode for a lithium secondary battery according to an exemplary embodiment of the present specification may be performed through the roll-to-roll process described above, and the steps of the manufacturing method may be sequentially performed through the roll-to-roll process. In this case, the traveling speed of the electrode active material layer may refer to the progress speed of the roll-to-roll process. That is, the progress speed of the roll-to-roll process from the step of bringing the transfer laminate into contact with at least one surface of the electrode active material layer to the step of separating the base material layer from the lithium metal layer may satisfy the above range.

The traveling speed of the electrode active material layer is to adjust the time from the time point of bringing the transfer laminate into contact with the electrode active material layer (point L in FIG. 1) to the time point of starting to separate the base material layer (point S in FIG. 1). When the above range is satisfied, the time until the separation of the base material layer can be adjusted to the above-described time range according to the specification, whereby the problems of heat generated by pre-lithiation being trapped in the base material layer and forming lithium nitride can be prevented. In addition, an additional roll may be further included during the traveling process of the electrode active material layer from the contact step to the step of separating the base material layer from the lithium metal layer, thereby securing the time until the separation of the base material layer.

In this case, the additional roll further included during the traveling process of the electrode active material layer may be one that is provided within the equipment for manufacturing the electrode according to the present specification, and by including a plurality of additional rolls, it is possible to secure the time until the separation of the base material layer as described above, reduce equipment space, and change the traveling direction of the electrode being manufactured. In this case, it may be independent of the traveling speed range of the electrode active material layer. Additionally, the additional roll may be a cooling roll, which may cool the heat generated during pre-lithiation to prevent the surface temperature of the electrode from rising.

In an exemplary embodiment of the present specification, pre-lithiation may proceed from the step of bringing the transfer laminate into contact with at least one surface of the electrode active material layer, which may be represented by a pre-lithiation reaction due to the high reactivity of the lithium metal layer before an activation process.

The method of manufacturing an electrode for a lithium secondary battery according to an exemplary embodiment of the present specification may further include a step of providing an electrode active material layer on at least one surface of an electrode current collector layer before the step of bringing the transfer laminate into contact with one surface of the electrode active material layer.

In the present specification, the 'electrode' may be a negative electrode or a positive electrode, and specifically, may be a negative electrode.

That is, in an exemplary embodiment of the present specification, the step of providing an electrode active material layer on at least one surface of the electrode current collector layer may be a step of providing a negative electrode active material layer on at least one surface of a negative electrode current collector layer, or may be a step of providing a positive electrode active material layer on at least one surface of a positive electrode current collector layer.

Below, the step of providing a negative electrode active material layer will be first described. However, the same method can also be applied to the step of providing a positive electrode active material layer.

The step of providing a negative electrode active material layer on at least one surface of the negative electrode current collector layer according to an exemplary embodiment of the present specification includes a step of preparing a negative electrode slurry; and a step of applying and drying the negative electrode slurry on at least one surface of the negative electrode current collector layer.

In an exemplary embodiment of the present specification, the negative electrode slurry may include a negative electrode active material layer composition and a slurry solvent.

In an exemplary embodiment of the present specification, a solid content of the negative electrode slurry may fall within a range of 1% or more and 40% or less.

In another exemplary embodiment, the solid content of the negative electrode slurry may fall within a range of 1% or more and 40% or less, specifically 5% or more and 35% or less, and more specifically 7% or more and 30% or less.

In the present specification, the solid content of the negative electrode slurry may refer to a content of the negative electrode active material layer composition included in the negative electrode slurry, and may refer to a content of the negative electrode active material composition based on 100 parts by weight of the negative electrode slurry.

When the solid content of the negative electrode slurry falls within the above range, an appropriate viscosity is secured when forming a negative electrode active material layer, thereby minimizing particle agglomeration of the negative electrode active material layer composition and enabling efficient formation of the negative electrode active material layer.

In an exemplary embodiment of the present specification, the slurry solvent is not limited thereto as long as it can dissolve the negative electrode active material layer composition. For example, the slurry solvent may be water (e.g., distilled water) or NMP.

According to an exemplary embodiment of the present specification, a negative electrode may be formed by applying and drying the negative electrode slurry on a negative electrode current collector layer, and through the drying step, the slurry solvent in the negative electrode slurry can be dried.

In an exemplary embodiment of the present specification, the electrode active material layer may include a silicon-based active material; a negative electrode conductive material; and a negative electrode binder, and the silicon-based active material may include one or more selected from the group consisting of Si, $SiO_x$ ($0 < x < 2$), Si/C, and a Si alloy.

In an exemplary embodiment of the present specification, the silicon-based active material may include one or more selected from the group consisting of Si and $SiO_x$ ($0 < x < 2$), and may include 60 parts by weight or more of Si based on 100 parts by weight of the silicon-based active material, which can lead to an improvement in the discharge capacity of the secondary battery.

In an exemplary embodiment of the present specification, for the silicon-based active material, pure silicon (Si) may be particularly used as the silicon-based active material. The use of pure silicon (Si) as the silicon-based active material may mean that, based on 100 parts by weight of the total silicon-based active material as described above, pure Si particles ($SiO_x$ (x=0)) not bonded to other particles or elements are included within the above range.

In an exemplary embodiment of the present specification, the Si may be included in an amount of 60 parts by weight or more, preferably 70 parts by weight or more, and more preferably 80 parts by weight or more, and 100 parts by weight or less, preferably 99 parts by weight or less, and more preferably 95 parts by weight or less, based on 100 parts by weight of the silicon-based active material.

In an exemplary embodiment of the present specification, the negative electrode active material including $SiO_x$ (0 < x < 2) may be silicon oxide particles including $SiO_x$ (0 < x < 2) and pores.

The $SiO_x$ (0 < x < 2) corresponds to an amorphous matrix within the silicon oxide particle. The $SiO_x$ (0 < x < 2) may exist in a form that includes some Si and $SiO_2$, and the Si may form a phase. That is, the x corresponds to the number ratio of O to Si contained in the $SiO_x$ (0 < x < 2). When the silicon oxide particle includes $SiO_x$ (0 < x < 2), the discharge capacity of the secondary battery can be improved.

In an exemplary embodiment of the present specification, the silicon-based active material may be silicon oxide particles including $SiO_x$ (0 < x < 2) and pores, and may include 20 parts by weight or more of the silicon oxide particles based on 100 parts by weight of the silicon-based active material.

In another exemplary embodiment of the present specification, the silicon oxide particles may be included in an amount of 20 parts by weight or more, preferably 30 parts by weight or more, and more preferably 40 parts by weight or more, and 100 parts by weight or less, preferably 99 parts by weight or less, and more preferably 95 parts by weight or less, based on 100 parts by weight of the silicon-based active material.

In another exemplary embodiment of the present specification, the electrode active material layer may be composed of a first negative electrode active material layer and a second negative electrode active material layer.

The first negative electrode active material layer of the electrode active material layer may include a first negative electrode active material, a negative electrode conductive material, and a negative electrode binder, and the second negative electrode active material layer may include a second negative electrode active material, a negative electrode conductive material, and a negative electrode binder. The first and second negative electrode active materials may be silicon-based negative electrode active materials including one or more selected from the group consisting of Si and $SiO_x$ (0 < x < 2), and specifically, the first negative electrode active material may be Si, and the second negative electrode active material may be $SiO_x$ (0 < x < 2).

In an exemplary embodiment of the present specification, the silicon-based active material may include metal impurities.

The metal impurities are impurities that may be included in silicon, and a content thereof may fall within a range of 0.1 part by weight or less based on 100 parts by weight of the total silicon-based active material.

In the charge/discharge reaction of a lithium secondary battery, lithium released from the positive electrode is intercalated into the negative electrode during charging and is deintercalated from the negative electrode to return to the positive electrode during discharging. However, silicon-based active materials undergo severe volume changes and surface side reactions, so that a substantial amount of lithium intercalated into the negative electrode during the initial charging cannot return to the positive electrode, resulting in an increased initial irreversible capacity. When the initial irreversible capacity increases, there occurs a problem that the battery capacity and the cycle characteristics are rapidly reduced.

In the present invention, in order to solve the problems as described above, the negative electrode of the lithium secondary battery is pre-lithiated to resolve the problem of initial irreversible capacity.

In addition, the present invention solves the problems of the related art in such a manner that while using the silicon-based active material as a negative electrode active material in order to improve the capacity performance, a composite of a binder of a specific condition and a conductive material bonded to the binder is used in order to solve the problems of maintaining the conductive path and the combination of the conductive material, the binder, and the active material in relation to the volume expansion.

Note that an average particle diameter (D50) of the silicon-based active material of the present specification may be 2 $\mu$m to 10 $\mu$m, specifically 3 $\mu$m to 8 $\mu$m, and more specifically 4 $\mu$m to 7 $\mu$m. When the average particle diameter falls within the above range, a specific surface area of the particles falls within a suitable range, resulting in formation of the viscosity of the negative electrode slurry within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, resulting in an increase in the capacity retention rate. Note that, when the average particle diameter falls within the above range, excessively large silicon particles are excluded, resulting in formation of a smooth surface of the negative electrode. Accordingly, a phenomenon of current density non-uniformity during charging and discharging can be prevented.

In an exemplary embodiment of the present specification, the silicon-based active material generally has a characteristic BET surface area. The BET specific surface area of the silicon-based active material is preferably 0.01 $m^2$/g to 150.0 $m^2$/g, more preferably 0.1 $m^2$/g to 100.0 $m^2$/g, particularly preferably 0.2 $m^2$/g to 80.0 $m^2$/g, and most preferably 0.2 $m^2$/g to 18.0 $m^2$/g. The BET specific surface area is measured in accordance with DIN 66131 (using nitrogen).

In an exemplary embodiment of the present specification, the silicon-based active material may be present in, for example, a crystalline or amorphous form, and is preferably not porous. The silicon-based particles are preferably spherical or fragment-shaped particles. Alternatively, but less preferably, the silicon-based particles may also have a fiber structure or be present in the form of a silicon-containing film or coating.

In an exemplary embodiment of the present specification, the silicon-based active material may be included in an amount of 60 parts by weight or more based on 100 parts by weight of the negative electrode active material layer composition.

In an exemplary embodiment of the present specification, the silicon-based active material may be included in an amount of 60 parts by weight or more, and preferably 65 parts by weight or more, and 95 parts by weight or less, preferably 90 parts by weight or less, and more preferably 80 parts by weight or less, based on 100 parts by weight of the negative electrode active material layer composition.

The negative electrode composition according to the present specification uses the specific conductive material and binder that can control the volume expansion rate during the charge and discharge processes even when the silicon-based active material with a significantly high capacity is used within the above range. As a result, the performance of the negative electrode is not deteriorated even within the above range, and excellent output characteristics during charging and discharging are achieved.

In an exemplary embodiment of the present specification, the silicon-based active material may have a non-spherical shape and its sphericity (circularity) is, for example, 0.9 or less, for example, 0.7 to 0.9, for example, 0.8 to 0.9, for example, 0.85 to 0.9.

In the present specification, the circularity is determined by Formula A-1 below, where A is an area and P is a boundary line.

$$[\text{Formula A-1}]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery. Therefore, a type of negative electrode conductive material that is used together with the silicon-based active material is important.

Accordingly, in an exemplary embodiment of the present specification, the negative electrode conductive material may include one or more selected from the group consisting of a point-like conductive material, a linear conductive material, and a planar conductive material.

In an exemplary embodiment of the present specification, the point-like conductive material refers to a conductive material with a zero-dimensional (0D) structure, in which a structure of a crystal cluster composed of one to several hundred atoms assumes a round spherical shape and has a volume. The point-like conductive material refers to a conductive material that may be used to improve conductivity of a negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present specification, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present specification, a particle diameter of the point-like conductive material may be 10 nm to 100 nm, preferably 20 nm to 90 nm, and more preferably 20 nm to 60 nm.

In an exemplary embodiment of the present specification, the conductive material may include a planar conductive material.

In an exemplary embodiment of the present specification, the planar conductive material refers to a conductive material with a two-dimensional (2D) structure, in which atoms form a crystal structure on a plane with a thickness of a single atomic layer or multiple atomic layers of two or more layers. The planar conductive material can improve conductivity by increasing surface contact between silicon particles in the negative electrode and at the same time suppress the disconnection of the conductive path due to the volume expansion, and may be expressed as a plate-like conductive material or a bulk-type conductive material.

In an exemplary embodiment of the present specification, the planar conductive material may include at least one selected from the group consisting of plate-like graphite, graphene, graphene oxide, and graphite flakes.

In an exemplary embodiment of the present specification, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present specification, there is provided the negative electrode composition in which the planar conductive material has D10 of 0.5 $\mu$m or greater and 1.5 $\mu$m or less, D50 of 2.5 $\mu$m or greater and 3.5 $\mu$m or less, and D90 of 7.0 $\mu$m or greater and 15.0 $\mu$m or less.

In an exemplary embodiment of the present specification, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present specification, the planar conductive material may have a BET specific surface area of 5 m$^2$/g or greater.

In another exemplary embodiment, the planar conductive material may have a BET specific surface area of 5 m$^2$/g or greater and 500 m$^2$/g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may fall within a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may fall within a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

In an exemplary embodiment of the present specification, the linear conductive material refers to a conductive material with a one-dimensional (1D) structure having a diameter in the nanometer order and a high aspect ratio, or a conductive material having a fibrous structure such as a cylindrical type or a tube type. Examples of the linear conductive material include carbon nanotubes, and the carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present specification, the linear conductive material may include any one selected from the group consisting of single-walled carbon nanotubes (SWCNTs) and multi-walled carbon nanotubes (MWCNTs), and specifically may include single-walled carbon nanotubes (SWCNTs).

In an exemplary embodiment of the present specification, the negative electrode conductive material may be included in an amount of 10 parts by weight or more and 40 parts by weight or less based on 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 20 parts by weight or less, on the basis of 100 parts by weight of the negative electrode active material layer composition.

The negative electrode conductive material according to the present specification has a completely different composition from a conductive material that is applied to the positive electrode. That is, the negative electrode conductive material according to the present specification serves to support a contact point between silicon-based active materials, which undergo a large volume expansion of the electrode due to charging and discharging, and the positive electrode conductive material serves to impart partial conductivity while playing a buffer role when rolled, and is completely different in composition and role from the negative electrode conductive material of the present specification.

In addition, the negative electrode conductive material according to the present specification is applied to a silicon-based active material and has a completely different composition from that of the conductive material applied to a graphite-based active material. That is, the conductive material used for the negative electrode having a graphite-based active material simply has small particles with respect to the active material, and thus has the characteristics of enhancing output characteristics and imparting partial conductivity, and the composition and role thereof are completely different from those of the negative electrode conductive material applied together with a silicon-based active material as in the present invention.

In an exemplary embodiment of the present specification, the negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, polyacrylamide, ethylene-propylene-diene monomer (EPDM), sulfonated EPDM, styrene butadiene rubber (SBR), fluoro rubber, poly acrylic acid, and materials in which hydrogen thereof is substituted with Li, Na, Ca, or the like, and may also include various copolymers thereof.

According to an exemplary embodiment of the present specification, the negative electrode binder serves to support the active material and conductive material in order to prevent distortion and structural deformation of the negative electrode structure during the volume expansion and relaxation of the silicon-based active material. When the above-mentioned role is satisfied, all general binders can be applied, specifically, an aqueous binder can be used, and more specifically, a polyacrylamide (PAM) binder can be used.

In an exemplary embodiment of the present specification, the negative electrode binder may be included in an amount of 30 parts by weight or less, preferably 25 parts by weight or less, and more preferably 20 parts by weight or less, and 1 part by weight or more or 3 parts by weight or more, based on 100 parts by weight of the negative electrode active material layer composition.

The negative electrode according to an exemplary embodiment of the present specification may include the above-described negative electrode active material; a negative electrode conductive material; and a negative electrode binder.

Specifically, the negative electrode may include a negative electrode current collector and a negative electrode active material layer arranged on at least one surface of the negative electrode current collector. The negative electrode active material layer may include the negative electrode active material described above. Furthermore, the negative electrode active material layer may further include a thickener.

In an exemplary embodiment of the present specification, the negative electrode current collector layer may generally have a thickness of 1 $\mu$m to 100 $\mu$m. The negative electrode current collector layer is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present specification, a thickness of the negative electrode current collector layer may be 1 $\mu$m or greater and 100 $\mu$m or less. However, the thickness may be variously modified depending on a type and a use of negative electrode used, and is not limited thereto.

The negative electrode active material layer may be formed by applying a negative electrode slurry, which includes a negative electrode active material, a binder, a thickener, and/or a conductive material, to at least one surface of the negative electrode current collector, followed by drying and rolling.

In an exemplary embodiment of the present specification, the negative electrode slurry may include a negative electrode active material layer composition and a slurry solvent.

In an exemplary embodiment of the present specification, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition based on 100 parts by weight of the negative electrode slurry.

When the solid content of the negative electrode slurry falls within the above range, an appropriate viscosity is secured when forming a negative electrode active material layer, thereby minimizing particle agglomeration of the negative electrode active material layer composition and enabling efficient formation of the negative electrode active material layer.

In another exemplary embodiment of the present specification, the solvent may include those known in the art. For example, the solvent may be water (e.g. distilled water) or NMP.

A negative electrode according to an exemplary embodiment of the present specification may be formed by coating and drying the negative electrode slurry on the negative electrode current collector layer.

Through the drying step, the slurry solvent in the negative electrode slurry can be dried.

An electrode for a lithium secondary battery according to an exemplary embodiment of the present specification includes an electrode current collector layer; and an electrode active material layer provided on at least one surface of the electrode current collector layer, and may be manufactured by the manufacturing method described above.

When the electrode active material layer was pre-lithiated by the conventional method of separating the base material layer immediately after bringing the transfer laminate into contact with the electrode active material layer, lithium byproducts were formed on the electrode surface, and the area where the lithium byproducts were formed was approximately 45% or greater of the area, where the lithium metal layer was transferred, of the electrode active material layer.

However, the electrode manufactured according to the method of manufacturing an electrode for a lithium secondary battery according to an exemplary embodiment of the present specification has a feature that the area of lithium byproduct formed on the surface of the electrode is 42% or less, specifically 40% or less, and more specifically 35% or less, relative to the area where the transfer laminate is transferred to at least one surface of the electrode active material layer. In this case, the lithium byproducts can be confirmed by observing the ratio of oxygen (O) or nitrogen (N) through EDS (Energy Dispersive Spectrometer) analysis using SEM (Scanning Electron Microscope) on a part of the electrode surface where the color has changed to white, and the area range of the lithium byproducts indicates that the lithium loss due to the generation of byproducts, such as lithium oxide or nitride of lithium transferred to the electrode active material layer has been reduced.

In addition, the electrode manufactured according to the method of manufacturing an electrode for a lithium secondary battery according to an exemplary embodiment of the present specification may have a peak surface temperature reduced by 1°C or more, specifically by 3°C or more, and more specifically by 5°C or more.

With this, it can be confirmed that the electrode is manufactured according to the method of manufacturing an electrode for a lithium secondary battery according to an exemplary embodiment of the present specification, the area can be obtained from the electrode surface immediately after the completion of pre-lithiation, and the peak temperature of the electrode surface can be measured by fixing a K-type thermocouple to the surface.

FIG. 6 is a diagram showing a laminated structure of a lithium secondary battery according to an exemplary embodiment of the present specification. Specifically, a negative electrode 100 for a lithium secondary battery including a negative electrode active material layer 20 on one surface of a negative electrode current collector layer 10 can be confirmed, a positive electrode 200 for a lithium secondary battery including a positive electrode active material layer 30 on one surface of a positive electrode current collector layer 40 can be confirmed, and it is shown that the negative electrode 100 for a lithium secondary battery and the positive electrode 200 for a lithium secondary battery are formed in a structure in which they are laminated with a separator 70 interposed therebetween.

Since the negative electrode has been described above, a detailed description thereof is omitted.

The positive electrode may include a positive electrode current collector and a positive electrode active material layer formed on at least one surface of the positive electrode current collector and including the positive electrode active material.

In the positive electrode, the positive electrode current collector layer is not particularly limited as long as it has conductivity without causing a chemical change in the battery, and for example, stainless steel, aluminum, nickel, titanium, fired carbon, or aluminum or stainless steel surface-treated with carbon, nickel, titanium, silver, or the like may be used. In addition, the positive electrode current collector layer may typically have a thickness of 3 $\mu$m to 500 $\mu$m, and a surface of the positive electrode current collector layer may be formed with microscopic irregularities to enhance adhesive force of the positive electrode active material. For example, the positive electrode current collector layer may be used in various forms, such as a film, a sheet, a foil, a net, a porous body, a foamed body, a non-woven body, and the like.

According to an exemplary embodiment of the present specification, the positive electrode active material may include one or more selected from the group consisting of lithium manganese oxide, lithium cobalt oxide, lithium nickel oxide, lithium iron oxide, lithium aluminum oxide, or a lithium composite oxide containing a combination thereof.

Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$, and $Cu_2V_2O_7$; Ni-site

type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.5$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn.); $LiMn_2O_4$ in which a part of Li of the chemical formula is substituted with an alkaline earth metal ion, or the like, but is not limited thereto.

In an exemplary embodiment of the present specification, an average particle diameter (D50) of the positive electrode active material may be 2 μm to 30 μm, specifically 3 μm to 20 μm, and more specifically 4 μm to 15 μm. When the average particle diameter falls within the above range, a specific surface area of the particles falls within a suitable range, resulting in formation of the viscosity of the positive electrode slurry within an appropriate range. Accordingly, the particles constituting the positive electrode slurry are smoothly dispersed.

In an exemplary embodiment of the present specification, the positive electrode active material may be included in an amount of 10 parts by weight or more, specifically 20 parts by weight or more, more specifically 30 parts by weight or more, and 100 parts by weight or less, specifically 99 parts by weight or less, and more specifically 98 parts by weight or less, based on 100 parts by weight of the positive electrode active material layer composition.

In an exemplary embodiment of the present specification, the electrode active material layer may include the above-described positive electrode active material, a positive electrode conductive material, and a positive electrode binder.

In this case, the positive electrode conductive material is used to impart conductivity to the electrode, and can be used without particular limitation as long as it has electronic conductivity without causing a chemical change in a battery to be configured. Specific examples may include graphite such as natural graphite and artificial graphite; a carbon-based material such as carbon black, acetylene black, Ketjen black, channel black, furnace black, lamp black, thermal black, and carbon fiber; metal powders or metal fibers such as copper, nickel, aluminum, and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used. Specifically, carbon black may be used.

In an exemplary embodiment of the present specification, the positive electrode conductive material may be included in an amount of 0.3 part by weight or more and 20 parts by weight or less, preferably 0.5 part by weight or more and 18 parts by weight or less, and more preferably 0.7 part by weight or more and 10 parts by weight or less, based on 100 parts by weight of the positive electrode active material layer composition.

In addition, the positive electrode binder serves to improve bonding between particles of the positive electrode active material and adhesive force between the positive electrode active material and the positive electrode current collector. Specific examples may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used. Specifically, polyvinylidene fluoride (PVdF) may be used.

In an exemplary embodiment of the present specification, the positive electrode binder may be included in an amount of 30 parts by weight or less, preferably 25 parts by weight or less, and more preferably 20 parts by weight or less, and 1 part by weight or more or 1.3 parts by weight or more, based on 100 parts by weight of the positive electrode active material layer composition.

The solvent may be a solvent that is generally used in the relevant technical field, and may include dimethyl sulfoxide (DMSO), isopropyl alcohol, N-methylpyrrolidone (NMP), acetone, or water, and one of these may be used alone, or a mixture of two or more may be used. A used amount of the solvent is sufficient if it can dissolve or disperse the active material, the conductive material, and the binder in consideration of an applied thickness of a slurry and a manufacturing yield, and then, allows for a viscosity capable of exhibiting excellent thickness uniformity when applied to manufacture a positive electrode and a negative electrode. Alternatively, the positive electrode and the negative electrode may be manufactured by laminating, on a current collector, a film obtained by casting the composition for active material layer formation on a separate support and peeling off it from the support.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the migration of electrolyte solution ions is preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/-methacrylate copolymer, or a stacked structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, ethyl methyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolytic solution with high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_3^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_3^-$, $CH_3CO_3^-$, $SCN^-$, and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

According to another exemplary embodiment of the present specification, a battery module including the lithium secondary battery as a unit cell, a battery pack including the same, and a battery pack including the lithium secondary battery may be provided. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

[Mode for Invention]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**\<Preparation Example\>**

**Preparation Example 1**

A negative electrode active material layer composition was prepared using Si (average particle diameter (D50): 4 μm) as a silicon-based active material, SWCNT, and polyacrylamide binder in a weight ratio of 80:10:10. A first negative electrode slurry (solid concentration: 30 wt%) was prepared by adding the composition to distilled water as a solvent for formation of a first negative electrode slurry.

A negative electrode active material layer composition was prepared using silicon oxide (average particle diameter (D50): 6 μm) as a silicon-based active material, SWCNT, and polyacrylamide binder in a weight ratio of 65:20:15. A second negative electrode slurry was prepared by adding the composition to distilled water as a solvent for formation of a second negative electrode slurry (solid concentration: 24 wt%).

As a mixing method, the conductive material, the binder, and water were dispersed at 2500 rpm for 30 minutes by using a homo mixer, the active material was added to the dispersion, and the resultant mixture was dispersed at 2500 rpm for 30 minutes to prepare first and second negative electrode slurries.

The first and second negative electrode slurries were double-layer coated on both surfaces of a copper current collector (thickness: 8 $\mu$m) serving as a negative electrode current collector for a total capacity of 8 mAh/cm$^2$, which was then roll-pressed and dried in a vacuum oven at 130°C for 10 hours to form a negative electrode active material layer (thickness: 30 $\mu$m).

A PET base material layer (thickness: 25 $\mu$m) was coated with a solution containing polymethylmethacrylate (PMMA) to form a release layer, a transfer laminate (thickness: 32.2 $\mu$m), in which a lithium metal layer (thickness: 6.2 $\mu$m) was deposited by a physical vapor deposition (PVD) method, was prepared on top of the release layer, and then the transfer laminate was brought into contact such that the lithium metal layer faced the negative electrode active material layer and pressurized with a pressure within a range of 100 kgf/cm$^2$ to 1000 kgf/cm$^2$ to transfer lithium metal, causing pre-lithiation to proceed at a capacity of 1.27 mAh/cm$^2$. Thereafter, the PET base material layer was removed after the time elapsed for each PET separation time period according to Table 1 below. (thickness of negative electrode: 35 $\mu$m)

**Preparation Example 2**

A negative electrode was prepared using the same preparation method as in Preparation Example 1, except that only the first negative electrode slurry in Preparation Example 1 was used to prepare a negative electrode active material layer, and the PET base material layer was removed after the time elapsed for each PET separation time period according to Table 2 below. (thickness of negative electrode: 30 $\mu$m)

**Preparation Example 3**

A negative electrode was prepared using the same preparation method as in Preparation Example 1, except that a negative electrode active material layer was prepared using only the first negative electrode slurry in Preparation Example 1, a lithium metal layer with a thickness of 4 $\mu$m was transferred onto the negative electrode active material layer to proceed with pre-lithiation at a capacity of 0.8 mAh/cm$^2$, and the PET base material layer was removed after the time elapsed for each PET separation time period according to Table 3 below. (thickness of negative electrode: 30 $\mu$m)

**Preparation Example 4**

A positive electrode slurry was prepared by adding NCM active material (average particle diameter (D50): 15 $\mu$m) as a positive electrode active material, carbon black as a conductive material, and polyvinylidene fluoride (PVdF) as a binder to N-methyl-2-pyrrolidone (NMP) as a solvent for formation of a positive electrode slurry in a weight ratio of 98:0.7:1.3 (solid concentration: 75 wt%).

The positive electrode slurry was coated on both surfaces of an aluminum current collector (thickness: 12 $\mu$m) serving as a positive electrode current collector for a capacity of 4 mAh/cm$^2$, which was then roll-pressed and dried in a vacuum oven at 130°C for 10 hours to form a positive electrode active material layer (thickness: 58 $\mu$m).

A transfer laminate (thickness: 32.2 $\mu$m) including a lithium metal layer (thickness: 6.2 $\mu$m) was then brought into contact with the upper surface of the positive electrode active material layer to transfer lithium metal, causing pre-lithiation to proceed at a capacity of 1.27 mAh/cm$^2$. Thereafter, the PET base material layer was removed after the time elapsed for each PET separation time period according to Table 4 below(thickness of positive electrode: 128 $\mu$m).

**Experimental Example 1: Change in peak surface temperature of negative electrode of Preparation Example 1 in accordance with PET separation time**

In the preparation process of the negative electrode prepared according to Preparation Example 1, a step of separating the PET from the lithium metal layer after the time elapsed for each PET separation time period according to Table 1 after bringing the transfer laminate into contact on the negative electrode active material layer was included. The case where the PET separation time was within 1 second, i.e., the PET was removed immediately after bringing the transfer laminate into contact, was designated as Comparative Example 1-1, and the cases where the PET was removed after the time according to Table 1 below elapsed were designated as Examples 1-1 to 1-6. Thereafter, the change in electrode surface temperature of each Example and Comparative Example was measured and shown in FIG. 3 (Comparative Example 1-1 is indicated as CE1-1 in FIG. 3, and Examples 1-1 to 1-6 are indicated as E1-1 to E1-6 in FIG. 3), and the peak temperature of the corresponding surface temperature is recorded in Table 1 below.

The surface temperature of the electrode was measured after fixing a K-type thermocouple to the electrode surface.

[Table 1]

| | Comparative Example 1-1 | Example 1-1 | Example 1-2 | Example 1-3 | Example 1-4 | Example 1-5 | Example 1-6 |
|---|---|---|---|---|---|---|---|
| PET separation time (seconds) | 0 | 10 | 20 | 30 | 40 | 50 | 60 |
| Peak surface temperatu re (°C) | 30 | 27 | 27 | 27 | 27.7 | 27.1 | 25.5 |

It was confirmed through Table 1 that in Comparative Example 1-1, in which the PET was separated immediately after bringing the transfer laminate into contact with the negative electrode active material layer according to Preparation Example 1, the time taken to reach the peak surface temperature (T in Formula 1 above) was 19 seconds, and the peak surface temperature of the negative electrode was lower in Examples 1-1 to 1-6, in which the PET was separated after the time (T' in Formula 1 above) of about 0.52 to 3.1 times 19 seconds, compared to Comparative Example 1-1.

Specifically, it was confirmed through Table 1 that based on the peak temperature of 30°C at which the risk of ignition is high when exposed to the air after pre-lithiation in the preparation process of the negative electrode according to Preparation Example 1, Examples 1-1 to 1-6 all had low peak temperatures of 27.7°C or lower, which indicates that the risk of ignition is low, and it was also confirmed that particularly in Example 1-6, the peak temperature was lower by as much as 4.5°C than that of Comparative Example 1.

In addition, it was confirmed in FIG. 3 that, compared to Comparative Example 1-1, in which the PET was separated immediately after bringing the transfer laminate into contact with the negative electrode active material layer according to Preparation Example 1, the peak surface temperature of the negative electrode of Examples 1-1 to 1-6, in which the PET was separated 10 seconds after the contact, was noticeably lowered.

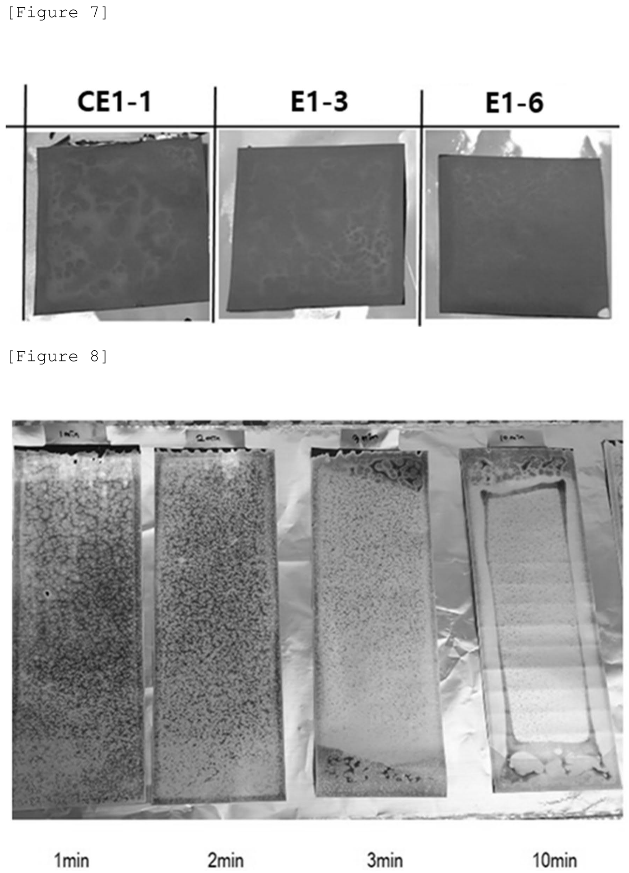

FIG. 7 is a photograph of the surfaces of the negative electrodes of Comparative Example 1-1 and Examples 1-3 and 1-6 after completion of pre-lithiation. Compared to Comparative Example 1-1, it was confirmed that less white byproduct was formed on the surface of the negative electrode of Example 1-3 (area of lithium byproducts: about 16%), and in particular, it was difficult to find white byproducts on the surface of the negative electrode of Example 1-6.

In addition, FIG. 8 is a photograph of the surface of the negative electrode in which pre-lithiation was performed while separating the PET 1 minute or longer after the transfer laminate was brought into contact with the negative electrode active material layer according to Preparation Example 1. Specifically, it was observed that white byproducts were generated on the surface of the negative electrode in which the PET was separated after 3 minutes or longer elapsed, compared to the negative electrode in which the PET was separated after less than 2 minutes elapsed. In particular, it was confirmed that the byproduct area on the negative electrode surface, in which the PET was separated after 10 minutes elapsed, reached approximately 49% of the total transfer area.

**Experimental Example 2: Changes in peak surface temperature of negative electrodes of Preparation Examples 2 and 3 in accordance with PET separation time**

In the preparation process of the negative electrode prepared according to Preparation Examples 2 and 3, a step of separating the PET from the lithium metal layer after the time elapsed for each PET separation time period according to Table 2 after bringing the transfer laminate into contact on the negative electrode active material layer was included. The case where the PET separation time was within 1 second, i.e., the PET was removed immediately after bringing the transfer laminate into contact, was designated as Comparative Examples 2-1 and 3-1, and the cases where the PET was removed after the other times elapsed were designated as Examples 2-1, 2-2, and 3-1. Thereafter, the change in electrode surface temperature of each Example and Comparative Example was measured and shown in FIG. 4 (Comparative Examples 2-1 and 3-1 are indicated as CE2-1 and CE3-1 in FIG. 4, and Examples 2-2 and 3-1 are indicated as E2-2 to E3-1 in FIG. 4), and the peak temperature of the corresponding surface temperature is recorded in Tables 2 and 3 below.

[Table 2]

| | Comparative Example 2-1 | Example 2-1 | Example 2-2 |
|---|---|---|---|
| PET separation time (seconds) | 0 | 10 | 20 |
| Peak surface temperature (°C) | 40.1 | 30.8 | 30.3 |

[Table 3]

|  | Comparative Example 3-1 | Example 3-1 |
|---|---|---|
| PET separation time (seconds) | 0 | 10 |
| Peak surface temperature (°C) | 25.8 | 24.3 |

It was confirmed through Table 2 and FIG. 4 that in Comparative Example 2-1, in which the PET was separated immediately after bringing the transfer laminate into contact with the negative electrode active material layer according to Preparation Example 2, the time taken for the surface temperature of the negative electrode to reach the maximum temperature (i.e., the time taken to reach the peak temperature (T in Formula 1 above)) due to the heat generated by the pre-lithiation was 13 seconds, and the peak surface temperature of the negative electrode was lower noticeably in Examples 2-1 and 2-2, in which the PET was separated after the time (T' in Formula 1 above) of about 0.7 to 1.6 times 13 seconds, compared to Comparative Example 2-1, and it was also confirmed through Table 2 and FIG. 4 that the peak temperature was lower as much as about 10°C, particularly compared to Comparative Example 2-1.

Likewise, it was confirmed through Table 3 and FIG. 4 that in Comparative Example 3-1, in which the PET was separated immediately after bringing the transfer laminate into contact with the negative electrode active material layer according to Preparation Example 3, the time taken for the surface temperature of the negative electrode to reach the maximum temperature (i.e., the time taken to reach the peak temperature (T in Formula 1 above)) due to the heat generated by the pre-lithiation was 14 seconds, and the peak surface temperature of the negative electrode was lower in Example 3-1, in which the PET was separated after the time (T' in Formula 1 above) of about 0.7 times 14 seconds, compared to Comparative Example 3-1. However, the peak surface temperature of the electrode did not increase significantly because the lithium metal layer was thin and the heat due to pre-lithiation was less generated.

## Experimental Example 3: Change in peak surface temperature of positive electrode of Preparation Example 4 in accordance with PET separation time

In the preparation process of the positive electrode prepared according to Preparation Example 4, a step of separating the PET from the lithium metal layer after the time elapsed for each PET separation time period according to Table 4 below after bringing the transfer laminate into contact on the positive electrode active material layer was included. The case where the PET separation time was within 1 second, i.e., the PET was removed immediately after bringing the transfer laminate into contact, was designated as Comparative Example 4-1, and the cases where the PET was removed after the other times elapsed were designated as Examples 4-1 to 4-6. Thereafter, the change in positive electrode surface temperature of each Example and Comparative Example was measured and shown in FIG. 5 (Comparative Example 4-1 is indicated as CE4-1 in FIG. 5, and Examples 4-1 to 4-6 are indicated as E4-1 to E4-6 in FIG. 5), and the peak temperature of the corresponding surface temperature is recorded in Table 4 below.

[Table 4]

|  | Comparative Example 4-1 | Example 4-1 | Example 4-2 | Example 4-3 | Example 4-4 | Example 4-5 | Example 4-6 |
|---|---|---|---|---|---|---|---|
| PET separation time (seconds) | 0 | 10 | 20 | 30 | 40 | 50 | 60 |
| Peak surface temperature (°C) | 36.7 | 34.5 | 31.4 | 29.9 | 30.1 | 28.8 | 28.2 |

It was confirmed that in Comparative Example 4-1, in which the PET was separated immediately after bringing the transfer laminate into contact with the positive electrode active material layer according to Preparation Example 4, the time taken for the surface temperature of the positive electrode to reach the maximum temperature (i.e., the time taken to reach the peak temperature (T in Formula 1 above)) due to the heat generated by the pre-lithiation was 33 seconds, and the peak surface temperature of the positive electrode was lowered noticeably in Examples 4-1 to 4-6, in which the PET was separated after the time (T' in Formula 1 above) of about 0.3 to 1.9 times 33 seconds, compared to Comparative Example 4-1, and it was also confirmed through Table 4 that the peak temperature was lowered by 5°C or more particularly in Examples 4-2 to 4-6, compared to Comparative Example 4-1.

In addition, it was confirmed in FIG. 5 that, compared to Comparative Example 4-1, in which the PET was separated immediately after bringing the transfer laminate into contact with the positive electrode active material layer according to Preparation Example 4, the peak surface temperature of the positive electrode of Examples 4-1 to 4-6, in which the PET was separated 10 seconds after the contact, was noticeably lowered.

Comprehensively considering the results of Experimental Examples 1 to 3, when the transfer laminate is brought into contact such that the lithium metal layer comes into contact with the electrode active material layer according to the method of manufacturing an electrode for a lithium secondary battery according to an exemplary embodiment of the present specification, and then the base material layer is separated after the time according to an exemplary embodiment of the present specification elapses, the heat generated during pre-lithiation is reduced, so that the electrode is exposed to the atmosphere in the state in which the surface temperature of the electrode is low, thereby reducing the risk of ignition. Additionally, as the lithium byproducts are less formed, additional ignition factors are eliminated, resulting in increased process safety. In addition, in the electrode manufacturing method of the present invention, the pre-lithiation proceeds through the transfer method, which enables a fast process speed and minimizes Li remaining on the electrode surface.

<Explanation of Reference Numerals and Symbols>

    10: negative electrode current collector layer
    20: negative electrode active material layer
    30: positive electrode active material layer
    40: positive electrode current collector layer
    50: electrode current collector layer
    60: electrode active material layer
    70: separator
    100: negative electrode for lithium secondary battery
    200: positive electrode for lithium secondary battery
    101a: lithium metal layer
    101b: base material layer
    101: transfer laminate
    201a: transfer roll
    201b: separation roll
    DR: traveling direction

**Claims**

1. A method of manufacturing an electrode for a lithium secondary battery, the method comprising:

    preparing a transfer laminate comprising a lithium metal layer and a base material layer;
    bringing the transfer laminate into contact such that the lithium metal layer comes into contact with at least one surface of an electrode active material layer; and
    separating the base material layer from the transfer laminate,
    wherein the separating is performed 10 to 120 seconds after the bringing the transfer laminate into contact.

2. A method of manufacturing an electrode for a lithium secondary battery, the method comprising:

    preparing a transfer laminate comprising a lithium metal layer and a base material layer;
    bringing the transfer laminate into contact such that the lithium metal layer comes into contact with at least one surface of an electrode active material layer; and
    separating the base material layer from the transfer laminate,
    wherein the separating is performed a time (T') satisfying Formula 1 after the bringing the transfer laminate into contact:

$$[\text{Formula 1}]$$

$$T' \text{ (sec)} \geq T \text{ (sec)} \times 0.3$$

in Formula 1,
T refers to a time taken for a surface of an electrode contacted by the lithium metal layer to reach a peak temperature when the base material layer is separated immediately after bringing the transfer laminate into contact.

3. The method of claim 1 or 2, wherein a thickness of the transfer laminate is 65 $\mu$m or less.

4. The method of claim 1 or 2, wherein a thickness of the lithium metal layer is 1 $\mu$m or greater and 10 $\mu$m or less.

5. The method of claim 1 or 2, wherein the bringing the transfer laminate into contact further comprises pressurizing the electrode active material layer and transfer laminate in contact with each other.

6. The method of claim 5, wherein a pressure in the pressurizing is 100 kgf/cm$^2$ or higher and 1000 kgf/cm$^2$ or less.

7. The method of claim 5, further comprising cooling the electrode active material layer and transfer laminate in contact with each other after the pressurizing.

8. The method of claim 1 or 2, wherein a traveling speed of the electrode active material layer is 80 m/min or less from the bringing the transfer laminate into contact with at least one surface of the electrode active material layer to the separating the base material layer from the transfer laminate.

9. The method of claim 1 or 2, wherein pre-lithiation of the electrode active material layer proceeds from the bringing the transfer laminate into contact with at least one surface of the electrode active material layer.

10. The method of claim 1 or 2, wherein the electrode active material layer comprises a silicon-based active material, a negative electrode conductive material, and a negative electrode binder, and
wherein the silicon-based active material comprises one or more selected from the group consisting of Si, SiO$_x$ (0 < x < 2), Si/C, and a Si alloy.

11. The method of claim 10, wherein the silicon-based active material comprises one or more selected from the group consisting of Si and SiO$_x$ (0 < x < 2), and comprises 60 parts by weight or more of Si based on 100 parts by weight of the silicon-based active material.

12. The method of claim 1 or 2, wherein the electrode active material layer comprises a positive electrode active material, a positive electrode conductive material, and a positive electrode binder, and
wherein the positive electrode active material comprises one or more selected from the group consisting of lithium manganese oxide, lithium cobalt oxide, lithium nickel oxide, lithium iron oxide, lithium aluminum oxide, or a lithium composite oxide containing a combination thereof.

13. A lithium secondary battery comprising:

an electrode for a lithium secondary battery manufactured by the method of claim 1 or 2;
a separator; and
an electrolyte.

14. A battery module comprising the lithium secondary battery of claim 13.

15. A battery pack comprising the lithium secondary battery of claim 13.

16. A battery pack comprising the battery module of claim 14.

[Figure 1]

[Figure 2]

[Figure 3]

[Figure 4]

[Figure 5]

[Figure 6]

[Figure 7]

[Figure 8]

## INTERNATIONAL SEARCH REPORT

| International application No. |
| --- |
| **PCT/KR2024/014689** |

| A. | CLASSIFICATION OF SUBJECT MATTER |
| --- | --- |

**H01M 4/139**(2010.01)i; **H01M 4/04**(2006.01)i; **H01M 4/38**(2006.01)i; **H01M 4/48**(2010.01)i; **H01M 4/505**(2010.01)i; **H01M 4/525**(2010.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 4/139(2010.01); H01M 10/04(2006.01); H01M 10/052(2010.01); H01M 4/02(2006.01); H01M 4/04(2006.01); H01M 4/38(2006.01); H01M 4/88(2006.01); H01M 8/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 리튬 이차 전지(lithium secondary battery), 리튬 금속층(lithium metal layer), 기재층(substrate layer), 활물질층(active material layer), 접촉(contact), 분리(separation)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0114731 A (LG ENERGY SOLUTION, LTD.) 01 August 2023 (2023-08-01) See paragraphs [0031], [0039], [0070]-[0073], [0123], [0124], [0131], [0138], [0141], [0142], [0154], [0167] and [0175]. | 1,3-16 |
| A | | 2 |
| Y | US 2023-0197925 A1 (SOLID POWER OPERATING, INC.) 22 June 2023 (2023-06-22) See paragraphs [0044], [0048], [0050], [0060] and [0061]; and figures 3 and 8. | 1,3-16 |
| Y | JP 2001-196070 A (TOYOTA MOTOR CORP.) 19 July 2001 (2001-07-19) See paragraphs [0016]-[0022]; and figure 1. | 7 |
| A | JP 05-258744 A (HYDRO QUEBEC) 08 October 1993 (1993-10-08) See paragraph [0027]; and figure 4. | 1-16 |

☑ Further documents are listed in the continuation of Box C.  ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **13 January 2025** | **14 January 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/014689** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2018-0100815 A (LG CHEM, LTD.) 12 September 2018 (2018-09-12)<br>See claims 1-14; and figure 1. | 1-16 |

## INTERNATIONAL SEARCH REPORT
### Information on patent family members

International application No.

**PCT/KR2024/014689**

| Patent document cited in search report | | | Publication date (day/month/year) | Patent family member(s) | | | Publication date (day/month/year) |
|---|---|---|---|---|---|---|---|
| KR | 10-2023-0114731 | A | 01 August 2023 | CN | 117897828 | A | 16 April 2024 |
| | | | | EP | 4369434 | A1 | 15 May 2024 |
| | | | | JP | 2024-530032 | A | 14 August 2024 |
| | | | | US | 2024-0332494 | A1 | 03 October 2024 |
| | | | | WO | 2023-146256 | A1 | 03 August 2023 |
| US | 2023-0197925 | A1 | 22 June 2023 | CN | 118830098 | A | 22 October 2024 |
| | | | | EP | 4430681 | A1 | 18 September 2024 |
| | | | | KR | 10-2024-0121859 | A | 09 August 2024 |
| | | | | WO | 2023-114536 | A1 | 22 June 2023 |
| JP | 2001-196070 | A | 19 July 2001 | CA | 2330718 | A1 | 12 July 2001 |
| | | | | CA | 2330718 | C | 05 July 2005 |
| | | | | DE | 10101058 | A1 | 02 August 2001 |
| | | | | JP | 3465656 | B2 | 10 November 2003 |
| JP | 05-258744 | A | 08 October 1993 | AT | E142050 | T1 | 15 September 1996 |
| | | | | CA | 2059228 | A1 | 14 July 1993 |
| | | | | DE | 69304218 | D1 | 02 October 1996 |
| | | | | DE | 69304218 | T2 | 16 January 1997 |
| | | | | EP | 0556131 | A1 | 18 August 1993 |
| | | | | EP | 0556131 | B1 | 28 August 1996 |
| KR | 10-2018-0100815 | A | 12 September 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230130479
- KR 1020240130749

- KR 1020210029459